# EUROPÄISCHE PATENTANMELDUNG

(11) **EP 1 070 865 A2**
(43) Veröffentlichungstag der Anmeldung: **24.01.2001**
(21) Anmeldenummer: 00113212.5
(22) Anmeldetag: 21.06.2000
(51) Int. Cl.: F16C 29/04

(54) **Linearwälzlager zum Übertragen von Drehmomenten**

(30) Priorität: 22.07.1999 DE 19933875
(71) Anmelder: INA Wälzlager Schaeffler oHG, 91074 Herzogenaurach (DE)
(72) Erfinder: Zernickel, Alexander, Dipl.-Ing., 91074 Herzogenaurach (DE)

(57) **Zusammenfassung**

Ein Linearwälzlager (16) zum Übertragen von Drehmomenten ist mit Kugelumläufen (24) versehen, die zwischen einem inneren Profilelement (17) und einem äußeren Profilelement (19) in einem Käfig (18) ausgebildet sind, wobei in einer ersten Führungsbahn (24a) durchlaufende Wälzkörper (22) mittels eines Federbleches (23) federnd vorgespannt sind.

## Beschreibung

### Gebiet der Erfindung

Die Erfindung betrifft ein Linearwälzlager zum Übertragen von Drehmomenten um seine Längsmittelachse mit einem inneren Profilelement und einem das innere Profilelement zumindest teilweise umschließenden äußeren Profilelement, wobei
- das innere Profilelement und das äußere Profilelement zueinander in Längsrichtung verschiebbar angeordnet sind,
- das innere Profilelement einen von einer Kreisform abweichenden Querschnitt aufweist sowie mit mindestens zwei nach außen weisenden und die Drehmomente übertragenden äußeren Wandabschnitten versehen ist,
- jedem äußerem Wandabschnitt wenigstens ein die Drehmomente übertragender innerer Wandabschnitt des äußeren Profilelementes zugeordnet ist,
- der äußere Wandabschnitt und der innere Wandabschnitt zueinander mittels Wälzkörpern gelagert sind und
- die Wälzkörper in mindestens einem Wälzkörperumlauf geführt sind
und wobei der Wälzkörperumlauf die Wälzkörper in Längsrichtung des Linearwälzlagers in einer ersten Führungsbahn durch eine Lastzone sowie die Wälzkörper anschließend mittels einer zweiten Führungsbahn durch eine lastfreie Zone führt.

### Hintergrund der Erfindung

Linearwälzlager werden in nahezu allen Bereichen des Maschinenbaus und der Kraftfahrzeugtechnik eingesetzt. Mit derartigen Lagern werden zueinander längsbeweglich verschiebbare Bauteile gegeneinander gelagert. In Anwendungen mit teleskopisch längenveränderlichen Wellen muß ein derartiges Lager zusätzlich die durch die Welle geleiteten Drehmomente übertragen. Teleskopisch längenveränderliche Wellen werden z. B. als Lenkwellen von Lenksäulen moderner Kraftfahrzeuge eingesetzt. Bei derartigen Lenksäulen ist die Position des Lenkrades im Fahrzeuginnenraum der individuellen Größe und Körperhaltung der Bedienperson anpassbar. Damit ändert sich der absolute Abstand des Lenkrades zu dem Lenkgetriebe. Diese Abstandsänderung ist durch zwei teleskopisch verschiebbar ineinander angeordnete Wellenenden korrigierbar. Da die Lenkwelle das Lenkdrehmoment vom Lenkrad zum Lenkgetriebe überträgt, müssen die Lenkwellen außerdem verdrehfest miteinander gekuppelt sein. Die Position des Lenkrades wird entweder manuell durch die Körperkraft der Bedienperson oder über Elektromotoren verstellt. Bei beiden Verstellmöglichkeiten dürfen die im Verschiebesitz der teleskopisch zueinander verschiebbaren Wellen auftretenden Kräfte nicht zu hoch sein. Mittels eines zwischen den beiden Wellenenden angeordneten Linearwälzlagers werden die Verschiebekräfte gering und über den gesamten Verschiebebereich in relativ konstanter Größe gehalten. Mitunter sind Lenkwellen auch während des Fahrzeugbetriebes Längenänderungen unterworfen. Diese Längenänderungen sind kurzhubig und oszillierend und werden durch eine Realtivbewegung des Lenkgetriebes mit dem unteren Lenkwellenende zu dem relativ festen oberen Lenkwellenende hervorgerufen.

Die Ausführungsformen der verwendeten Linearwälzlager sind unterschiedlich. In obengenannter Anwendung sind häufig aus Kostengründen Linearwälzlager eingesetzt, die nur einen begrenzten Hub des einen Bauteiles gegenüber dem anderen Bauteil zulassen. Diese Lager weisen in der Regel zwischen den zueinander längsverschiebbaren Bauteilen in einem Käfig geführte Wälzkörper auf. Der Käfig neigt während des Betriebes insbesondere bei oszillierenden kurzhubigen Bewegungen zum Wandern. Dabei rollen die Wälzkörper nicht ab sondern gleiten. Der Käfig erreicht auf diese Weise eine Position aus der der funktionsbedingte Hub des Käfigs nicht mehr gewährleistet ist. In der Folge sind bei größeren Hubbewegungen aber auch bei kurzhubigen Bewegungen die Wälzkörper und der Käfig Zwangsbewegungen ausgesetzt die zum Gleiten und zu unzulässigem Verschleiß führen.

Auf den ersten Blick bietet sich deshalb der Einsatz eines Linearwälzlagers nach dem Stand der Technik an, das eine unbegrenze Schiebebewegung zuläßt. Diese Lager sind mit einem oder mehreren Kugelumläufen versehen, bei denen die Kugeln nacheinander eine Belastungszone und anschließend eine belastungsfreie Rücklaufzone durchlaufen und wieder in die Belastungszone geführt werden. Ein derartiges Linearwälzlager ist in DE 33 08 831 A1 beschrieben. Dabei ist eine Hülse innen und außen mit Wälzkörperlaufbahnen versehen und wird innen und außen von Käfighälften umfaßt. Die Wälzkörper rollen von der belasteten Innenzone am Innendurchmesser der Hülse und der Außenkontur der Schiebewelle käfiggeführt in die entlastete Zone zur und über die Außenkontur der Hülse sowie von da wieder in die belastete Zone. Mit dem Einsatz derartiger Lager werden die Nachteile der anfangs erwähnten Linearwälzlager für begrenzten Hub vermieden. Sie sind jedoch relativ kompliziert aufgebaut und nicht spielfrei ausgeführt.

Aus Gründen des Komforts und der Funktion ist es häufig erforderlich, daß derartige Lager spielfrei ausgeführt sind. Spiel in einer Lagerung zwischen zwei Enden einer Lenkwelle bedeutet Minderung der Lenkqualität und Komforteinbußen infolge möglicher Klappergeräusche. Die Lenkqualität wird negativ beeinflußt, da sich Radialspiel zwischen den beiden Lenkwellenenden in einem Verdrehspiel am Lenkrad äußert. Die erwähnten Klappergeräusche sind akustisch oder durch Vibrationen am Lenkrad spürbar und wirken unangenehm auf die Bedienperson. Die anfangs erwähnten Linearwälzlager mit begrenztem Hub lassen sich dagegen mit relativ einfachen Mitteln spielfrei gestalten. So ist z. B. in EP 0 281 723 B1 ein Drehmomente übertragendes Linearwälzlager beschrieben, bei der Wälzlaufbahnen mittels Federelementen an dem inneren Bauteil abgestützt sind. Die Federelemente spannen in Wälzkörper gegen das äußere Bauteil vor. Der spielfreie Sitz der Bauteile zueinander ist gewährleistet. Verstellbewegungen der Bauteile in Längsrichtung zueinander werden durch die Rollbewegung der Wälzkörper leichtgängig und verschleißarm. Die Bauteile sind mit einem geringen Spaltmaß, d. h. mit einem Maß das ≦ dem Federweg der Federelemente ist, zueinander angeordnet. Die Federelemente sind so ausgelegt, daß die Wälzkörper im Falle normaler Drehkräfte jegliches Drehmoment aufnehmen. Wird aber das eine gegen das andere Bauteil unter der Wirkung eines zu hohen Drehmomentes verdreht, federn die Federelemente soweit ein, bis die Bauelemente aneinander liegen. Das Drehmoment wird nun direkt über die Wandung der Bauteile übertragen und die Wälzkörper sind entlastet. Die Federelemente müssen den normalen Drehkräften angepaßt werden. Sie wirken also im Normalbetrieb schon mit relativ hoher Vorspannung. Unter dieser hohen Vorspannung leidet die Leichtgängigkeit mit der ein Linearlager unter Umständen funktionieren muß.

### Zusammenfassung der Erfindung

Aufgabe der Erfindung ist es daher, ein Linearwälzlager zu schaffen, das die Nachteile der vorgenannten Ausführungen von Linearwälzlagern vermeidet.

Diese Aufgabe wird nach dem kennzeichnenden Teil des Anspruches 1 dadurch erfüllt, daß ein Linearwälzlager mit Kugelumläufen geschaffen ist, bei dem der Wälzkörperumlauf in einem Käfig angeordnet ist und der Käfig zwischen einem inneren Wandabschnitt eines Außenprofils sowie einem äußeren Wandabschnitt eines inneren Profilelementes angeordnet ist, und daß eines der Profilelemente wenigstens ein auf die in dem Wälzkörperumlauf befindlichen und belasteten Wälzkörper wirkendes Vorspannmittel zum spielfreien Vorspannen der Profilelemente gegeneinander aufweist. Ein derartiges Linearwälzlager ist einfach und kostengünstig herzustellen. Sowohl das innere Profilelement als auch das äußere Profilelement sind einfach zu gestalten und brauchen nicht mit zusätzlichen Wälzkörperlaufbahnen, Käfighalterungen oder anderen für den Wälzkörperumauf notwendigen Elementen versehen zu sein. Der Wälzkörperumlauf ist im Wälzkörperkäfig ausgebildet. Die Führungsbahnen der Wälzkörper die zu einem Umlauf miteinander verbunden sind sind ausschließlich in den Käfig eingebracht. Der erforderliche Freiraum für den Rücklauf der unbelasteten Wälzkörper ist mit einfachen Mitteln, z. B. durch eine Nut mit relativ großen Toleranzen, mit geringem Aufwand in eines oder beides der Profilelemente einzubringen. Die Vorteile eines Linearwälzlagers mit Wälzkörperumlauf werden genutzt ohne jedoch dessen anfangs genannten Nachteile in Kauf zu nehmen.

Ein derartiges Lager ist einfach spielfrei zu gestalten. Es ist spielfrei ausgeführt, indem die in der Lastzone befindlichen Wälzkörper mit einem Vorspannmittel belastet gegen einen Wandabschnitt eines oder beider Profilelemente abgestützt sind, während das Vorspannmittel selbst an einem oder beiden der Profilelemente angeordnet ist. Denkbar ist z. B. der Einsatz von als Laufbahn gestalteten Federblechen. Die Federbleche sind einfach durch Stanzen und Biegen bzw. Prägen aus Federstahl oder Federstahl ähnlichem gehärteten Material gefertigt und weisen z. B. ein in ihrem Querschnitt gewölbtes Profil auf. Das Federblech ist im Querschnitt gesehen um ein Maß gewölbt, das mindestens minimal größer als das größtmögliche theoretische Spiel infolge Fertigungstoleranzen in der Lagerung sein sollte. Das Federblech erzeugt vorgespannt im montierten Zustand in der Linearwälzlagerung eine Vorspannung auf die auf ihm ablaufenden belasteten Wälzkörper. Die belasteten Wälzkörper sind gegen den gegenüberliegenden Wandabschnitt vorgespannt. Derartige Federbleche können auch in beide sich gegenüberliegende bzw. einander zugeordnete Wandabschnitte eingelegt sein. Die Blechdicke der Federbleche und/oder die Ausführung der Wölbung richtet sich nach der erforderlichen Vorspannung. Die Vorspannung muß aber nicht so groß sein, um über das Federblech und die Wälzkörperdrehmomente auf den anderen Wandabschnitt zu übertragen. Es reicht, wenn diese Federbleche soviel Vorspannung erzeugen, daß das Linearlager für Längsbewegungen und im Betriebszustand spielfrei ausgelegt ist.

Eine Ausgestaltung der Erfindung sieht vor, daß das Vorspannmittel durch wenigstens einen in der Lastzone befindlichen sowie federelastisch ausgebildeten Laufbahnabschnitt an zumindest einem der einander zugeordneten Wandabschnitte gebildet ist. Hier ist vorzugsweise wiederum das anfangs erwähnte gewölbte Federblech zu verwenden. In diesem Fall ist das Federblech jedoch nur im Querschnitt gesehen in dem Abschnitt gewölbt, in dem sich die Lastzone befindet. Die Federwirkung ist die gleiche wie die im vorstehenden Abschnitt beschriebene. Alternativ dazu kann ein im wesentlichen flaches Blech eingesetzt werden, das sich an einem der Wandabschnitte abstützt und mittels einer Hebelwirkung die Vorspannung auf die belasteten Wälzkörper erzeugt. Derartige Federbleche sind mit minimalem Aufwand herzustellen. Die Federvorspannung ist durch die Blechdicke und die Hebellänge beeinflußbar.

In einer weiteren Ausgestaltung der Erfindung ist vorgesehen das die Lastzone bei Einleiten der Drehmomente soweit einfedert, daß die einander zugeordneten Wandabschnitte sich soweit aufeinander zubewegen, bis wenigstens ein Abschnitt des Käfigs die Drehmomente von einem der einander zugeordneten Wandabschnitte zu dem andern der einander zugeordneten Wandabschnitte überträgt. Der Käfig bildet somit außer einem Mittel zum Führen der Wälzkörper auch ein Mittel zum Übertragen der Drehmomente. Der Käfig ist mit relativ geringem Abstand zu jeder der Wandungen angeordnet. Über den Abstand des Käfigs zu den Wandungen wird die Größe des Drehmomentes bestimmt die zuerst von nur den Wälzkörpern übertragen wird. Bei Überschreiten dieses Drehmoments federt die Lastzone ein und die Wandungen bewegen sich aufeinander zu bis sie den Käfig bzw. den einen Abschnitt des Käfigs zwischen sich einklemmen. Die Größe des Drehmomentes, das noch über die Wälzkörper und Laufbahnen übertragen wird ist durch die Auslegung der einfedernden Elemente in der Lastzone und wie schon erwähnt durch den Abstand des Käfigs zur Wandung bestimmbar. Es ist in einer weiteren Ausgestaltung deshalb vorgesehen den in der Lastzone ausgebildeten Laufbahnabschnitt federelastisch zu gestalten. Dabei kann ein derartiger Laufbahnabschnitt entweder an einem Wandabschnitt, alternativ am inneren Profilelement bzw. am äußeren Profilelement, oder an beiden einander zugeordneten Wandabschnitten ausgebildet sein. Es ist in dieser Ausgestaltung weiterhin vorgesehen, daß die federelastisch ausgebildeten Laufbahnabschnitte bei Einleiten der Drehmomente soweit einfedern das die einander zugeordneten Wandabschnitte sich wieder gegeneinander bewegen bis sie den Abschnitt des Käfigs zwischen sich einspannen oder alternativ sich direkt aneinander berühren.

Weitere Ausgestaltungen der Erfindung sehen vor, daß das innere Profilelement durch einen Innenring des Linearwälzlagers gebildet ist und das das äußere Profilelement durch eine Hülse des Linearwälzlagers gebildet ist. Derartige Elemente lassen sich im Spanlosverfahren aber auch spanend, insbesondere in der Massenfertigung kostengünstig fertigen. Der Vorteil der Fertigung einzelner Elemente liegt darin, daß die Rohre und Wellen in oder auf denen ein derartiges Linearwälzlager zur Anwendung kommt relativ einfach gestaltet werden können. Der Innenring bzw. der Außenring werden in die oder auf die einfach gestalteten Profile vorzugsweise gepreßt. Es ist aber auch denkbar das die inneren Wandabschnitte bzw. die Laufbahnen für den Ablauf der Wälzkörper in der Lastzone direkt durch die Oberfläche der teleskopisch zueinander verschiebbare Bauteile gebildet ist. In einem solchen Fall ist es besonders vorteilhaft wenn die Wellenelemente und die dazugehörigen Außenrohre eine einfache Geometrie aufweisen. Deshalb ist mit einer weiteren Ausgestaltung der Erfindung vorgesehen, das innere Profil in seinem Querschnitt polygonförmig mit mindestens drei äußeren Wandabschnitten auszubilden. Drei nach außen weisende Wandabschnitte sichern eine gleichmäßige Verteilung der aus der Drehmomenteinleitung resultierenden Kräfte auf alle Lastzonen des Linearlagers. Unabhängig davon sind jedoch auch rechteckige, quaderförmige oder weitere polygone Querschnittsformen einsetzbar.

Wie anfangs schon erwähnt, sind aus Federblech gestaltete Teile einfach und kostengünstig zu gestalten sowie herzustellen. Eine weitere Ausgestaltung der Erfindung sieht deshalb vor, daß an einem oder beiden der einander zugeordneten Wandabschnitte eine dünnwandig elastisch federnd ausgebildete Laufbahn vorgesehen ist und diese Laufbahn im Bereich der lastfreien Zone eine Längsnut aufweist. Diese Längsnut, vorzugsweise durch Stanzen eingebracht, sorgt dafür das die Wälzkörper in ihrem Umlauf entlastet und geführt zurücklaufen. Auch in dieser Ausgestaltung federt die Laufbahn zumindest in der Lastzone soweit ein, daß die einander zugeordneten Bandabschnitte sich soweit gegeneinander bewegen bis sie einander berühren oder einen Abschnitt des Käfigs zwischen sich einspannen. Für das Einfedern ist in dem entsprechenden Profilelement genügend Freiraum geschaffen. Die Federbleche sind auf einfache Weise in die Profile eingelegt, eingeschnappt, verschweißt oder anderweitig befestigt.

Schließlich ist vorgesehen, daß das innere Profilelement durch einen Abschnitt einer Lenkwelle sowie das äußere Profilelement durch den zweiten Abschnitt einer Lenkwelle einer Lenkung eines Kraftfahrzeuges gebildet ist. Ein Großteil der für Lenksäulen moderner Kraftfahrzeuge verwendeten Bauteile wird durch die spanlose Bearbeitung von Blech hergestellt. Derartige Lenksäulen müssen einfach herzustellen sein, ein geringes Gewicht aufweisen, geringen Bauraum in Anspruch nehmen, funktionssicher und komfortabel arbeiten. Aus diesem Grunde ist das Linearlager gemäß Erfindung mit seinen Ausführungsformen besonders für einen Einsatz zwischen teleskopisch zueinander verschiebbaren Lenkwellen geeignet.

### Kurze Beschreibung der Zeichnungen

Die Erfindung wird nachfolgend anhand von mehreren Ausführungsbeispielen erläutert. Es zeigen:
- Figur 1: Schnittdarstellung eines Ausführungsbeispieles des Linearlagers gemäß Erfindung mit einem Wälzkörperumlauf pro Wandabschnitt,
- Figur 2: ein weiteres Ausführungsbeispiel mit zwei Kugelumläufen pro inneren Wandabschnitt und elastisch ausgebildete Laufbahnen an beiden einander zugeordneten Wandabschnitten,
- Figur 3: ein Ausführungsbeispiel eines Linearwälzlagers gemäß Erfindung mit elastisch federnd ausgebildeten Laufbahnen, die in das äußere Profilelement eingelegt sind,
- Figur 4: eine Schnittdarstellung durch das Linearwälzlager nach Figur 3 entlang der Linie IV,
- Figur 5: einen Schnittdarstellung durch das Linearwälzlager nach Figur 3 entlang der Linie IV in alternativer Ausgestaltung zu der nach Figur 4 gezeigten Ansicht und
- Figur 6: eine weitere alternative Ausgestaltung zu der nach Figur 4 gezeigten Ansicht.

### Detaillierte Beschreibung der Zeichnung

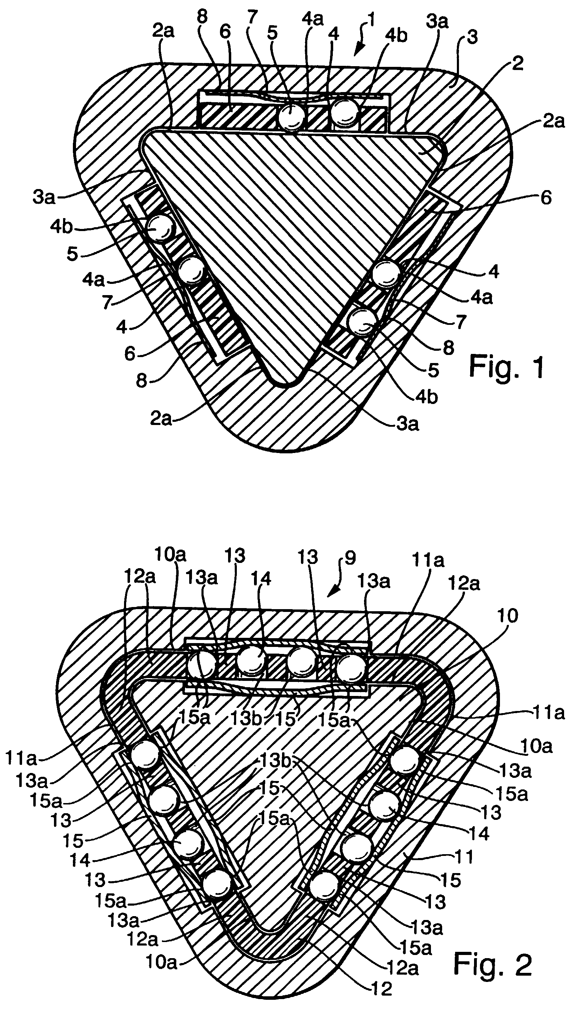

In Figur 1 ist mit 1 ein Ausführungsbeispiel eines Linearwälzlagers gemäß Erfindung dargestellt. Das Linearwälzlager 1 ist durch ein inneres Profilelement 2, ein äußeres Profilelement 3 und Wälzkörperumläufe 4 gebildet. Das innere Profilelement 2 ist z. B. an einem unteren Abschnitt einer Lenkwelle ausgebildet und das äußere Profilelement 3 an einem oberen Abschnitt einer Lenkwelle. Das innere Profilelement 2 ist polygonförmig mit drei gleichgestalteten äußeren Wandabschnitten 2a versehen. Jedem äußeren Wandabschnitt 2a ist ein innerer Wandabschnitt 3a des äußeren Profilelementes 3 zugeordnet. Jeder äußere Wandabschnitt 2a ist mittels Wälzkörpern 5 an dem ihm zugeordneten inneren Wandabschnitt 3a gelagert. Zwischen jedem äußeren Wandabschnitt 2a und inneren Wandabschnitt 3a ist ein Käfig 6 montiert. In jedem Käfig 6 ist einer der Wälzkörperumläufe 4 ausgebildet, in dem die Wälzkörper 5 umlaufen. In den äußeren Wandabschnitt 3a ist ein federelastisch ausgebildeter Laufbahnabschnitt 8 eingelegt. Der Laufbahnabschnitt 8 ist in seinem Querschnitt gesehen mit einer Wölbung 7 versehen und mit Vorspannung in das Linearwälzlager 1 montiert. Der Laufbahnabschnitt 8 überträgt die Vorspannung über in einer ersten Führungsbahn 4a des Kugelumlaufes 4 befindliche Wälzkörper 5 auf den äußeren Wandabschnitt 2a. Die Wälzkörper 5 werden in der ersten Führungsbahn 4a durch eine Lastzone des Kugelumlaufes 4 geführt. Der Kugelumlauf 4 weist weiterhin eine zweite Führungsbahn 4b auf, in der die Wälzkörper 5 durch eine lastfreie Zone geführt sind. Die an drei Seiten des Linearlagers 1 auf das innere Profilelement 2 wirkende Vorspannung sichert die Spielfreiheit des Linearwälzlagers 1 ab. Drehmomente werden von dem inneren Profilelement 2 mittels des äußeren Wandabschnittes 2a über den inneren Wandabschnitt 3a auf das äußere Profilelement 3 und umgekehrt übertragen. Dabei liegen das innere Profilelement 2a und das äußere Profilelement 3a aneinander, wie mit der Strichpunktlinie dargestellt ist. Der Laufbahnabschnitt 8 ist dabei in der Lastzone eingefedert.

Figur 2 zeigt ein weitere Ausführungsbeispiel der Erfindung. Ein Linearwälzlager 9 ist durch ein inneres Profilelement 10, ein äußeres Profilelement 11 und einen das innere Profilelement 10 im Querschnitt gesehen umgreifenden Käfig 12 gebildet. Das innere Profilelement 10 ist wiederum mit drei äußeren Wandabschnitten 10a versehen. Jedem äußeren Wandabschnitt 10a sind zwei Wälzkörperumläufe 13 zugeordnet. Die Wälzkörper 14 sind wiederum als Kugeln ausgebildet. Die Wälzkörper 14 in einer ersten Führungsbahn 13a des Wälzkörperumlaufes 13 sind von zwei Seiten durch jeweils einen federelastisch ausgebildeten Laufbahnabschnitt 15a eines als Federblech 15 ausgebildeten Vorspannelementes vorgespannt. In jeden äußeren Wandabschnitt 10a und in jeden dem äußeren Wandabschnitt 10a zugeordneten inneren Wandabschnitt 11a ist dazu eines der Federbleche 15 eingelegt. In einer zweiten Führungsbahn 13b des Wälzkörperumlaufes 13 laufen die entlasteten Wälzkörper 14 bei einer Linearbewegung zurück. Drehmomente werden von dem inneren Profilelement 10 über drei Abschnitte 12a des Käfigs 12 zum äußeren Profilelement 11 übertragen, indem das innere Profilelement 10 gegen die Abschnitte 12a des Käfigs wirkt und den Käfig 12 gegen die inneren Wandabschnitte 11a des äußeren Profilelementes drückt und umgekehrt. Die Laufbahnabschnitte 15a federn dabei zu gleichen oder ungleichen Teilen ein.

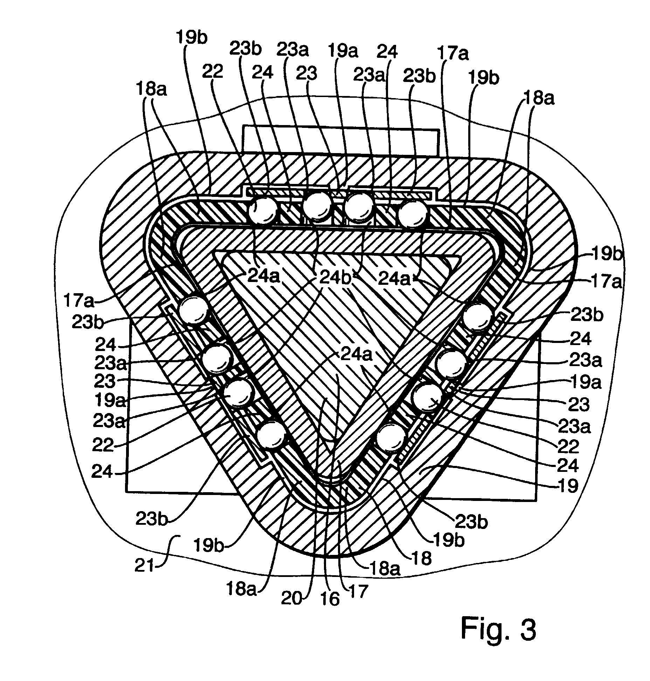

Figur 3 zeigt mit 16 ein weiteres Ausführungsbeispiel eines Linearwälzlagers gemäß Erfindung. Das innere Profilelement des Linearwälzlagers 16 ist durch einen Innenring 17 gebildet. Den Innenring 17 umgreift ein Käfig 18. Der Käfig 18 ist zwischen dem Innenring 17 und einem als Außenring 19 ausgebildeten äußeren Profilelement angeordnet. Der Innenring 17 sitzt auf einem Wellenabschnitt 20. Der Außenring 19 ist in ein nicht vollständig dargestelltes Gehäuse 21 eingepreßt. Der Innenring 17 weist drei gleich ausgebildete äußere Wandabschnitte 17a auf. In den Außenring 19 sind als Vorspannmittel Federbleche 23 eingelegt. Das Federblech 23 ist auf einem Vorsprung 19a des Außenringes 19 aufgenommen. Der Käfig 18 weist pro äußeren Wandabschnitt 17a zwei Wälzkörperumläufe 24 auf. In einer ersten Führungsbahn 24a eines Kugelumaufes 24 durchlaufen belastete Wälzkörper 22 eine Lastzone. Diese Lastzone wird durch einen federnd vorgespannten Laufbahnabschnitt 23b des Federbleches 23 erzeugt. In der zweiten Führungsbahn 24b laufen die Wälzkörper 22 entlastet zurück. Die Walzkörper in der zweiten Führungsbahn 24b sind lastfrei, da ihnen mit einer Längsnut 23a in dem Federblech 23 der dazu notwendige Freiraum geschaffen ist. Drehmomente vom Wellenabschnitt 20 werden über den Innenring 17 und Käfigabschnitte 18a sowie die inneren Wandabschnitte 19b des Außenringes 19 auf das Gehäuse 21 übertragen. Das Federblech 23 federt dabei im Bereich der Lastzone ein.

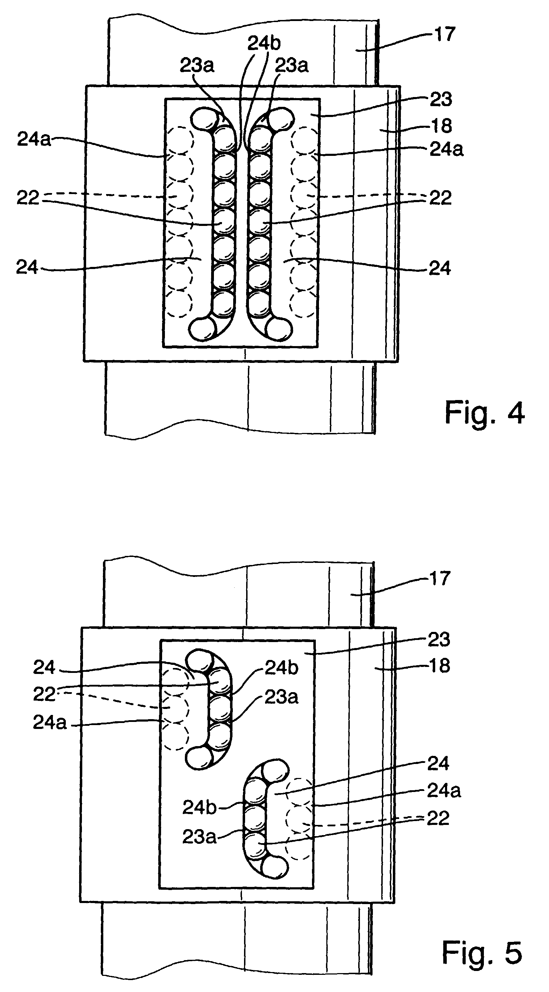

Figur 4 zeigt einen Schnitt durch das Linearwälzlager 16 nach Figur 3, wobei der Käfig 18 in der Draufsicht dargestellt ist. In dieser Ansicht sind die nebeneinander liegenden Kugelumläufe 24 in der Draufsicht sichtbar. Die gestrichelt dargestellten Wälzkörper 22 durchlaufen die Lastzone in der erste Führungsbahn 24a. Nach dem Durchlaufen der ersten Führungsbahn 24a werden die Wälzkörper 22 in die zweite Führungsbahn 24b umgelenkt. Die Längsnut 23a sichert ab, daß die Wälzkörper 22 lastfrei die zweite Führungsbahn 24b durchlaufen.

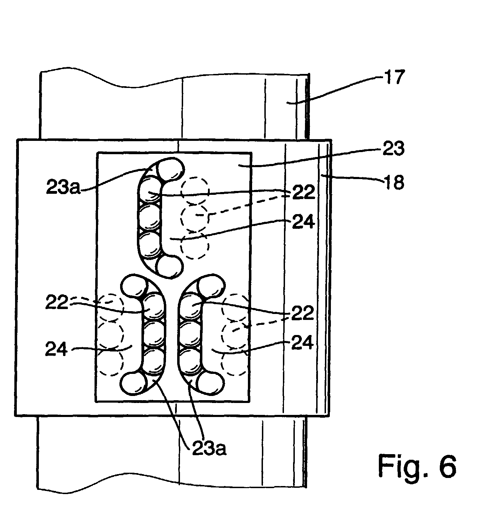

Figur 5 und Figur 6 zeigen alternative Anordungen der Kugelumläufe 24. In Figur 5 sind die Kugelumläufe 24 in Längsrichtung des Käfigs 18 gesehen versetzt aber ansonsten parallel zueinander ausgerichtet angeordnet. Figur 6 zeigt einen Käfig 18 der jeweils zwischen einander zugeordneten Wandabschnitten drei Kugelumläufe 24 aufweist.

### Bezugszeichen

- 1: Linearwälzlager
- 2: inneres Profilelement
- 2a: äußerer Wandabschnitt
- 3: äußeres Profilelement
- 3a: innerer Wandabschnitt
- 4: Wälzkörperumlauf
- 4a: erste Führungsbahn
- 4b: zweite Führungsbahn
- 5: Wälzkörper
- 6: Käfig
- 7: Wölbung
- 8: Laufbahnabschnitt
- 9: Linearwälzlager
- 10: inneres Profilelement
- 10a: äußerer Wandabschnitt
- 11: äußeres Profilelement
- 11a: innerer Wandabschnitt
- 12: Käfig
- 12a: Abschnitt
- 13: Wälzkörperumlauf
- 13a: erste Führungsbahn
- 13b: zweite Führungsbahn
- 14: Wälzkörper
- 15: Federblech
- 15a: Laufbahnabschnitt
- 16: Linearwälzlager
- 17: Innenring
- 17a: äußere Wandabschnitte
- 18: Käfig
- 18a: Käfigabschnitt
- 19: Außenring
- 19a: Vorsprung
- 19b: innerer Wandabschnitt
- 20: Wellenabschnitt
- 21: Gehäuse
- 22: Wälzkörper
- 23: Federblech
- 23a: Längsnut
- 23b: Laufbahnabschnitt
- 24: Wälzkörperumlauf
- 24a: erste Führungsbahn
- 24b: zweite Führungsbahn

## Patentansprüche

1. Linearwälzlager (1, 9, 16) zum Übertragen von Drehmomenten um seine Längsmittelachse mit einem inneren Profilelement (2, 10, 17) und einem das innere Profilelement (2, 10, 17) zumindest teilweise umschließenden äußeren Profilelement (3, 11, 19) wobei
- das innere Profilelement (2, 10, 17) und das äußere Profilelement (3, 11, 19) zueinander in Längsrichtung verschiebbar angeordnet sind,
- das innere Profilelement (2, 10, 17) einen von einer Kreisform abweichenden Querschnitt aufweist sowie mit mindestens zwei nach außen weisenden und die Drehmomente übertragenden äußeren Wandabschnitten (2a, 10a , 17a) versehen ist,
- jedem äußeren Wandabschnitt (2a, 10a, 17a) wenigstens ein die Drehmomente übertragender innerer Wandabschnitt (3a, 11a, 19b) des äußeren Profilelementes zugeordnet ist,
- der äußeren Wandabschnitt (2a, 10a, 17a) und der innere Wandabschnitt (3a, 11a, 19b) zueinander mittels Wälzkörper (5, 14, 22) gelagert sind und
- die Wälzkörper (5, 14, 22) in mindestens einem Wälzkörperumlauf (4, 13, 24) geführt sind
und wobei der Wälzkörperumlauf (4, 13, 24) die Wälzkörper (5, 14, 22) in Längsrichtung des Linearwälzlagers (1, 9, 16) in einer ersten Führungsbahn (4a, 13a, 24a) durch eine Lastzone sowie die Wälzkörper (5, 14, 22) anschließend mittels einer zweiten Führungsbahn (4b, 13b, 24b) durch eine lastfreie Zone führt, **dadurch gekennzeichnet, daß** der Wälzkörperumlauf (4, 13, 24) in einem zwischen dem inneren Wandabschnitt (3a, 11a, 19b) und dem äußeren Wandabschnitt (2a, 10a, 17a) angeordneten Käfig (6, 12, 18) ausgebildet ist und zumindest eines der Profilelemente (2, 3, 10, 11, 17, 19) wenigstens ein auf die belasteten Wälzkörper (5, 14, 22) wirkendes Vorspannmittel zum spielfreien Verspannen der Profilelemente (2, 3, 10, 11, 17, 19) gegeneinander aufweist.

2. Linearwälzlager nach Anspruch 1 **dadurch gekennzeichnet, daß** das Vorspannmittel durch wenigstens einen in der Lastzone befindlichen sowie federelastisch ausgebildeten Laufbahnabschnitt (8, 15a, 23b) an zumindest einem der einander zugeordneten Wandabschnitte (2a, 3a, 10a, 11a, 17a, 19b) gebildet ist.

3. Linearwälzlager nach Anspruch 1 **dadurch gekennzeichnet, daß** das Vorspannmittel durch wenigstens einen in der Lastzone befindlichen sowie federelastisch ausgebildeten Laufbahnabschnitt (8, 15a, 23b) an zumindest einem der einander zugeordneten Wandabschnitte (2a, 3a, 10a, 11a, 17a, 19b) gebildet ist, wobei der Laufbahnabschnitt (8, 15a, 23b) bei Einleiten eines der Drehmomente soweit einfedert, daß die einander zugeordneten Wandabschnitte (2a, 3a, 10a, 11a, 17a, 19b) sich soweit gegeneinander bewegenden bis sie sich einander berühren oder einen Abschnitt (12a, 18a) des Käfigs (12, 18) zwischen sich einspannen.

4. Linearwälzlager nach Anspruch 1 **dadurch gekennzeichnet, daß** bei Einleiten der Drehmomente zumindest den Laufbahnabschnitt (15a, 23b) soweit einfedert, daß die einander zugeordneten Wandabschnitte (10a, 11a, 17a, 19b) sich soweit aufeinander zu bewegen, bis wenigstens ein Abschnitt (12a, 18a) des Käfigs (12, 18) die Drehmomente von einem der einander zugeordneten Wandabschnitte (10a, 11a, 17a, 19b) zu dem anderen der einander zugeordneten Wandabschnitte (10a, 11a, 17a, 19b) überträgt.

5. Linearwälzlager nach Anspruch 1 **dadurch gekennzeichnet, daß** das innere Profilelement durch einen Innenring (17) des Linearwälzlagers (16) gebildet ist.

6. Linearwälzlager nach Anspruch 1 **dadurch gekennzeichnet, daß** das äußere Profilelement durch einen Außenring (19) des Linearwälzlagers (16) gebildet ist.

7. Linearwälzlager nach Anspruch 1 **dadurch gekennzeichnet, daß** das innere Profilelement (2, 10, 17) in seinem Querschnitt polygonförmig ausgebildet sowie mit mindestens drei der äußeren Wandabschnitte (2a, 10a, 17a) versehen ist.

8. Linearwälzlager nach Anspruch 1 **dadurch gekennzeichnet, daß** das Vorspannmittel durch einen an mindestens einem der einander zugeordneten Wandabschnitte (19a) angeordneten dünnwandigen und elastisch federnd ausgebildeten Laufbahnabschnitt (23b) gebildet ist und der Laufbahnabschnitt (23b) in der lastfreien Zone mit einer Längsnut (23a) versehen ist und daß der Laufbahnabschnitt (23b) bei Einleiten eines der Drehmomentes zumindest in der Lastzone soweit einfedert, daß die einander zugeordneten Wandabschnitte (17a, 19b) sich soweit gegeneinander bewegen bis sie sich einander berühren oder einen Abschnitt (18a) des Käfigs zwischen sich einspannen.

9. Linearwälzlager nach Anspruch 1 **dadurch gekennzeichnet, daß** das innere Profilelement (2, 10, 17) durch einen ersten Abschnitt einer Lenkwelle sowie das äußere Profilelement (3, 11, 19) durch einen zweiten Abschnitt einer Lenkwelle einer Lenkung eines Kraftfahrzeuges gebildet ist.
